**Europäisches Patentamt**

**European Patent Office**

**Office européen des brevets**

(19)

(11) Veröffentlichungsnummer: **0 179 158 B1**

(12) # EUROPÄISCHE PATENTSCHRIFT

(45) Veröffentlichungstag der Patentschrift: **30.12.92**

(51) Int. Cl.5: **D01G 19/10**, D01H 4/32

(21) Anmeldenummer: **84112588.3**

(22) Anmeldetag: **18.10.84**

(54) Sägezahn-Stanzteil als Garnitur für ein Kämmsegment einer Kämmwalze für Textilmaschinen.

(43) Veröffentlichungstag der Anmeldung:
**30.04.86 Patentblatt 86/18**

(45) Bekanntmachung des Hinweises auf die Patenterteilung:
**30.12.92 Patentblatt 92/53**

(84) Benannte Vertragsstaaten:
**AT BE CH DE FR GB IT LI NL SE**

(56) Entgegenhaltungen:
FR-A- 493 546
GB-A- 1 580 045
US-A- 1 620 031

(73) Patentinhaber: **Staedtler & Uhl**
**Nördliche Ringstrasse 12**
**W-8540 Schwabach(DE)**

(72) Erfinder: **Egerer, Josef, Ing.**
**Beim Biengarten 2b**
**W-8540 Schwabach(DE)**

(74) Vertreter: **Rau, Manfred, Dr. Dipl.-Ing. et al**
**Rau & Schneck, Patentanwälte Königstrasse 2**
**W-8500 Nürnberg 1(DE)**

**Beschreibung**

Die Erfindung betrifft ein Sägezahn-Stanzteil gemäß dem Oberbegriff von Anspruch 1.

Derartige Stanzteile sind aus der DE-A-3o o7 245 bekannt. Diese Stanzteile weisen gegenüber einer früher verwendeten, schraubenlinienförmig aufgezogenen Sägezahn-Garnitur den Vorteil auf, daß für eine im Zuge des Betriebes erforderlich werdende Erneuerung der Garnitur nur ein geringer Aufwand erforderlich ist, d.h. der Anwender kann eine neue Garnitur selbst aufbringen, ohne daß eine Einsendung der Walzen bzw. Kämmsegmente an einen Spezialbetrieb erforderlich ist. Mit diesen Stanzteilen werden also erhebliche wirtschaftliche Vorteile erzielt, weil die Standzeiten der Maschinen kurzgehalten werden und der Arbeitsaufwand gering ist.

Bedingt durch die vorstehend angesprochene technische Entwicklung, welche von einem endlosen "Sägezahndraht" ausging, der auf die Kämmwalze aufgezogen wurde, ging die Fachwelt davon aus, daß auch die verwendeten Sägezahn-Stanzteile untereinander ebenso wie die Zähne jedes einzelnen Stanzteils gleich ausgebildet sein müßten.

Der Erfindung liegt nun die Erkenntnis zugrunde, daß die Kämmwirkung noch erheblich dadurch verbessert werden kann, daß innerhalb eines Stanzteils unterschiedliche Ausbildungen der Zähne verwendet werden.

Dementsprechend liegt der Erfindung die Aufgabe zugrunde, die Gurnitur für ein känn segment einer Kämmwalze so auszugestalten, daß die Qualität der Kämmung verbessert und die Produktion, d.h. der Materialdurchsatz, erhöht werden.

Diese Aufgabe wird erfindungsgemäß gelöst durch den kennzeichnenden Teil von Anspruch 1. Durch die danach vorgesehene progressive Änderung der Spitzenhöhe wird erreicht, daß beim Eintritt in dem Faserbart durch die in Drehrichtung gesehen vorne größere Spitzenhöhe der dort liegenden Zähne der Faserbart voll durchdrungen und bis zum Boden der Kämmwalze eingezogen wird, während herkömmlicherweise bei einem gleichmäßigen Spitzenvorstand ein Teil der Fasern nicht oder nicht ausreichend durchdrungen werden konnte und somit schlechter gekämmt wurde. Durch die erfindungsgemäße Ausgestaltung werden, wie Versuche gezeigt haben, Produktionserhöhungen von bis zu 3o% gegenüber einer herkömmlichen Sägezahn-Garnitur erreicht.

Als Spitzenhöhe im Sinne vorstehender Ausführungen ist der Spitzenabstand vom konstant bleibenden radialen Abstand der Einschnitte zwischen zwei Zähnen bezogen auf den Drehmittelpunkt definiert. Mit anderen Worten ist eine größere Spitzenhöhe gleichbedeutend mit einem größeren Spitzenabstand vom Drehmittelpunkt der Kämmwalze im montierten Zustand.

Durch den vorgesehenen spitzeren Eingriffswinkel am in Drehrichtung gesehen vorderen Teil des Sägezahn-Stanzteils wird das Eindringen der Zähne in den Faserbart erleichtert, wobei ein derartiges weiches und leichtes Eindringen für die Erzielung eines ruckfreien und damit materialschonenden Bewegungsablaufs von wesentlicher Bedeutung ist.

Als Eingriffswinkel wird im vorliegenden Fall der Winkel zwischen der Vorderflanke jedes Zahns und der gedachten Verbindung der zugehörigen Zahn-Spitze mit dem Drehmittelpunkt definiert.

Die erfindungsgemäße Ausgestaltung, wonach vorgesehen ist, daß der Spitzenabstand in Drehrichtung gesehen vorne größer ist, erleichtert ebenfalls das Eindringen in den Faserbart.

Insgesamt wird also eine verbesserte Kämmwirkung erreicht. Gleichwohl ist sichergestellt, daß auch eine Putzbürste, welche nach jedem Kämm-Intervall die Kämm-Walze reinigt, effektiv arbeiten kann, was insbesondere durch die relativ niedrige Spitzenhöhe am in Drehrichtung gesehen hinteren Ende gewährleistet ist, indem die Putzbürste ebenfalls leicht eindringen kann.

Ein Kämm-Segment gemäß Anspruch 2 ermöglicht es, die für das Eindringen in den Faserbart besonders wichtige vordere Reihe von Sägezahn-Stanzteilen in der Sägezahn-Formgebung und Dimensionierung optimal an die Erfordernisse anzupassen, während für die nachfolgenden Reihen in bekannter Weise ausgestattete Segmente verwendet werden können.

Die Anordnung der Sägezahn-Stanzteile innerhalb der Reihe eines Kamm-Segments bzw. deren Formgebung bringt einen Versatz der Spitzen mit sich, der sich bei bekannten Sägezahn- und Nadelgarnituren als vorteilhaft erwiesen hat, durch die erfindungsgemäße Ausgestaltung aber in besonders einfacher Weise entsprechend einer gewünschten Konfiguration ausgelegt werden kann.

Bei einer weiteren Ausgestaltung setzt sich die progressive Abnahme der Spitzenhöhe und vorzugsweise auch des Eingriffswinkels und des Spitzenabstands über den gesamten Kämmwinkel des Kämm-Segments von z.B. 13o° fort. Die gleiche technische Wirkung kann durch eine weitere Ausgestaltung erreicht werden, wobei dort lediglich nicht nur eine Reihe von Stanzteilen, wovon sich jedes über einen relativ weiten Winkelbereich erstreckt, sondern mehrere nacheinander angeordnete Reihen vorgesehen sind, so daß insgesamt eine progressive Abnahme der in Betracht stehenden Kenngrößen gegen die Drehrichtung erzielt wird.

Weitere Merkmale, Vorteile und Einzelheiten der Erfindung ergeben sich aus der folgenden Beschreibung einer bevorzugten Ausführungsform anhand der Zeichnung. Dabei zeigen:

Fig. 1 eine Aufsicht auf ein erfindungsgemäßes Sägezahn-Stanzteil und

Fig. 2 ein Kämm-Segment, umfassend mehrere Reihen von Sägezahn-Stanzteilen
von der Stirnseite her gesehen.

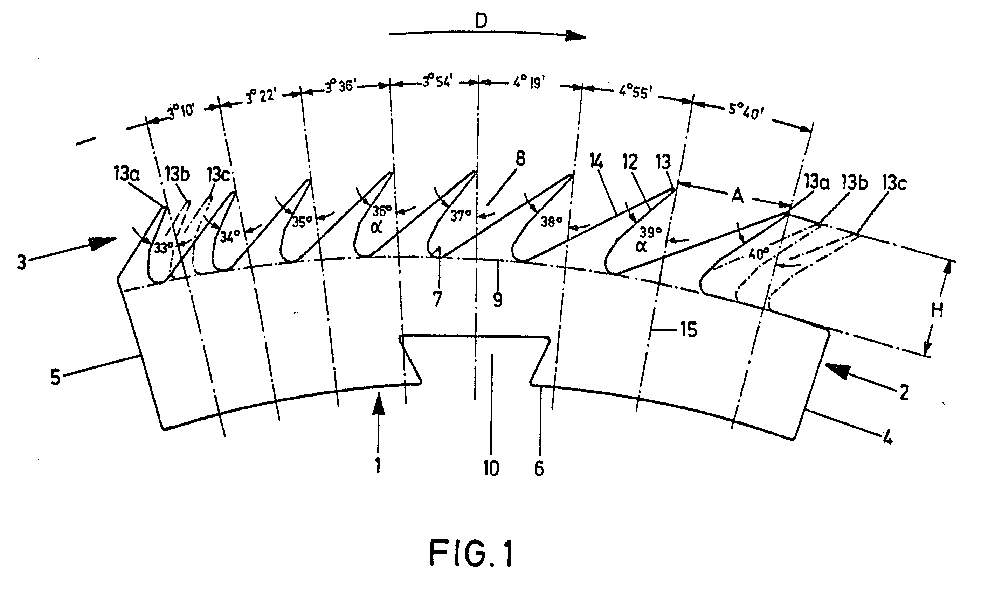

Ein in Fig. 1 dargestelltes erfindungsgemäßes
Sägezahn-Stanzteil 1 umfaßt ein Fußteil 2 und eine
Mehrzahl von daran angeordneten Zähnen 3.

Das Fußteil 2 wird begrenzt von zwei radial
verlaufenden Seitenkanten 4, 5, einer kreisabschnittsförmig verlaufenden Unterkante 6 und einer
durch die Verbindungslinien der Talpunkte 7 der
Einschnitte 8 zwischen den Zähnen 3 definierte
Oberkante 9.

Das Fußteil 2 weist eine schwalbenschwanzförmige Ausnehmung 10 auf. Diese dient dazu, das
Stanzteil auf eine korrespondierende Schwalbenschwanzführung an einem Kämmsegment aufzuschieben. Grundsätzlich ist jedoch im Hinblick auf
die erfindungsgemäße Ausgestaltung des Stanzteils auch jede andere Befestigung desselben
denkbar, z.B. auch eine solche über seitliche Ansätze des Fußteils, durch Kleben usw.

Jeder Zahn 3 weist eine Vorderflanke 12, eine
Spitze 13 und eine Hinterflanke 14 auf. Zur Charakterisierung der Zahnform wird die Spitzenhöhe H
als Abstand der Spitzen 13 von der Oberkante 9
des Fußteils 2 definiert, wobei diese Höhe proportional ist zum Abstand der Spitzen 13 von dem in
Fig. 1 nicht dargestellten Drehmittelpunkt M im
montierten Zustand des Stanzteils 1. Als Eingriffswinkel $\alpha$ wird der Winkel zwischen der Vorderflanke
12 eines Zahns 3 und der durch die jeweilige
Spitze 13 gehenden Radius bezogen auf den Drehmittelpunkt im montierten Zustand definiert. Als
Spitzenabstand wird der Abstand A der Spitzen 13
zweier benachbarter Zähne 3 definiert.

Ein erfindungsgemäßes Stanzteil 1 ist nun so
ausgestaltet, daß in Drehrichtung D von einem
Zahn 3 zum nächsten die Spitzenhöhe H, der
Spitzenabstand A und der Eingriffswinkel $\alpha$ zunehmen. Die Zunahme dieser drei Größen erfolgt vorzugsweise stetig progressiv, kann grundsätzlich
aber auch stufenweise erfolgen.

Durch die vorstehend beschriebene Ausgestaltung wird ein weicher, tiefer Eingriff des Stanzteils
in den Faserbart erreicht, der Faserbart wird vollständig durchdrungen und gleichwohl wird die
Wirksamkeit der Putzbürsten nicht beeinträchtigt.
Hierdurch ist es möglich, eine wesentliche Produktionssteigerung bei einfacher Austauschbarkeit der
Garnitur und bei gleichmäßigem, verschleißarmen
Maschinenlauf zu erreichen.

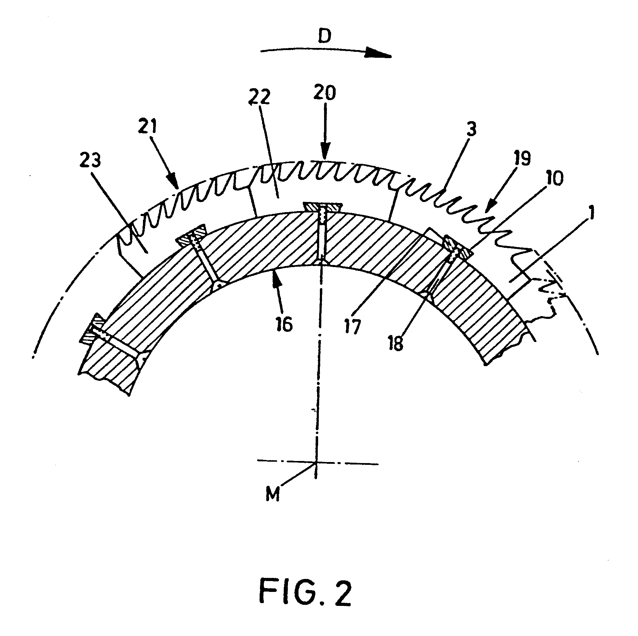

In Fig. 2 ist veranschaulicht, wie erfindungsgemäße Sägezahn-Stanzteile 1 auf einem Kämm-
Segment 16 garniert werden können. Im Ausführungsbeispiel nach Fig. 2 ist auf einer ein Schwalbenschwanzprofil aufweisenden Halteleiste 17, welche mittels einer Schraube 18 an dem Kämm-
Segment 16 befestigt ist, eine erste Reihe 19 von
erfindungsgemäßen Stanzteilen 1 aufgereiht, indem
diese mit ihren Ausnehmungen 10 auf die Halteleiste 17 aufgeschoben sind. Die Zähne 3 der Stanzteile 1 sind, wie in Fig. 2 nur angedeutet und im
Zusammenhang mit Fig. 1 im einzelnen beschrieben, erfindungsgemäß ausgestaltet.

Gegen die Drehrichtung D gesehen schließt
sich an die erste Reihe 19 eine zweite Reihe 20
und eine dritte Reihe 21 von Stanzteilen 22 und 23
an, wobei diese Stanzteile 22, 23 in an sich bekannter Weise ausgeführt sind, d.h. sie weisen
Zähne mit gleichbleibender Spitzenhöhe, mit jeweils gleichem Eingriffswinkel $\alpha$ und konstant bleibendem Spitzenabstand auf. Die Reihen von Stanzteilen 22, 23 sind auf dem Kämm-Segment 16,
dessen Drehmittelpunkt M in Fig. 2 ebenfalls eingezeichnet ist, in entsprechender Weise befestigt
wie die Reihe 19 von Stanzteilen 1. Durch die Wahl
erfindungsgemäßer Stanzteile 1 für die in Drehrichtung gesehen erste Reihe 19 werden die erfindungsgemäß erzielbaren Vorteile beim Ersteingriff
in den Faserbart erzielt, wobei die nachfolgenden
Reihen 20, 21 auch dann noch eine gute Kämmwirkung entfalten, wenn sie in an sich bekannter Weise ausgestaltet sind.

Eine weitere denkbare Variante ist in Fig. 1
gestrichelt bzw. strichpunktiert eingezeichnet. Dabei werden für die Bestückung einer Reihe von
Stanzteilen 1 Stanzteile mit unterschiedlichem Eingriffswinkel $\alpha$ gewählt, so daß die Spitzen von in
einer Reihe benachbarten Stanzteilen 1 in axialer
Richtung gegeneinander versetzt sind, wie dies in
Fig. 1 anhand der Spitzen 13a, 13b und 13c veranschaulicht ist.

Um auch eine Vorstellung von der Vermaßung
einer besonders vorteilhaften Ausgestaltung eines
erfindungsgemäßen Stanzteils 1 zu vermitteln, ist in
Fig. 1 der Spitzenabstand A in Winkelgraden und
der Eingriffswinkel $\alpha$ eingezeichnet. Die Zunahme
der Spitzenhöhe H vom letzten Zahn 3 bis zum
ersten Zahn 3 in Drehrichtung D gesehen beträgt
dabei etwa 50% bezogen auf die Spitzenhöhe H
des in Drehrichtung gesehen hintersten Zahns 3.

**Patentansprüche**

1. Sägezahn-Stanzteil als Garnitur für ein Kämm-
Segment einer Kämm-Walze für Textilmaschinen, insbesondere Kämm-Maschinen, umfassend ein der Halterung am Kämm-Segment
(16) dienendes Fußteil (2) und eine Mehrzahl
sich von diesem weg erstreckender, in spitzem
Winkel zur radialen Richtung (15) des Kämm-
Segments (16) in Drehrichtung (D) geneigter
Zähne (3), dadurch gekennzeichnet, daß die
Spitzenhöhe (H), der Eingriffswinkel ($\alpha$) und

der Spitzen-Abstand (A) in Drehrichtung (D) gesehen zunehmen.

2.  Kämm-Segment mit einer Sägezahn-Stanzteil-Garnitur, wobei mehrere Reihen (19,2o,21) von Stanzteilen (1,22,23) unmittelbar aneinander anschließend hintereinander angeordnet sind, dadurch gekennzeichnet, daß die in Drehrichtung (D) gesehen jeweils erste Reihe (19) mit Sägezahn Stanzteilen (1) nach Anspruch 1 versehen ist, während die nachfolgenden Reihen (20,21) von Stanzteilen (22,23) Stanzteile (22,23) umfassen, deren Zähne untereinander jeweils identisch ausgebildet sind.

## Claims

1.  A saw-toothed stamped part as an outfit for a comb segment of a porcupine for textile machines, especially combing machines, comprising a foot (2) functioning as the holding component in the comb segment (16) and a plurality of teeth (3) extending from the foot (2) and being inclined in pointed angle to the radial direction (15) of the comb segment (16) in the direction of rotation (D), characterized in that the height of tips (H), the angle of engagement ($\alpha$) and the distance between the tips (A) increase seen in the direction of rotation (D).

2.  A comb segment with a saw-toothed stamped part outfit, whereby several rows (19, 20, 21) of stamped parts (1, 22, 23) are coordinated directly with each other and successively one after the other, characterized in that the respective first row (19) seen in the direction of rotation (D), is provided with saw-toothed stamped parts (1) according to claim 1, whereas the following rows (20, 21) of stamped parts (22, 23) comprise stamped parts (22, 23) the teeth of which are formed identical with each other.

## Revendications

1.  Pièce estampée à dents de scie, employée comme garniture pour un segment d'un peigne circulaire pour machines textiles, en particulier pour des peigneuses, comprenant une partie de pied (2) servant de support sur le segment de peigne (16) et une pluralité de dents (3) qui s'étendent dans la direction opposée à la partie de pied (2) et qui sont inclinées dans le sens de rotation (D) à angle aigu par rapport à la direction radiale (15) du segment de peigne (16), caractérisée en ce que la hauteur de sommet (H), l'angle d'attaque ($\alpha$) et la distance entre sommets (A) augmentent dans le sens de rotation (D).

2.  Segment de peigne comprenant une garniture en pièces estampées à dents de scie, plusieurs rangées (19, 20, 21) de pièces estampées (1, 22, 23) étant disposées les unes derrière les autres et directement à la suite les unes des autres, caractérisé en ce que la première rangée (19), vue dans le sens de rotation (D), est munie de pièces estampées à dents de scie (1) conformes à la revendication 1, tandis que les rangées suivantes (20, 21) de pièces estampées (22, 23) comprennent des pièces estampées (22, 23) dont les dents sont conçues de manière identique les unes aux autres.

FIG.1

EP 0 179 158 B1

FIG. 2